# EUROPEAN PATENT SPECIFICATION

(11) **EP 3 875 440 B1**
(45) Date of publication and mention of the grant of the patent: **28.09.2022**
(21) Application number: 20160541.7
(22) Date of filing: 03.03.2020
(51) Int. Cl.: C03C 17/38

(54) **METHOD OF FORMING A MICROELECTRONIC DEVICE**
VERFAHREN ZUR HERSTELLUNG EINER MIKROELEKTRONISCHEN VORRICHTUNG
PROCÉDÉ DE FORMATION D'UN DISPOSITIF MICROÉLECTRONIQUE

(43) Date of publication of application: 08.09.2021
(73) Proprietor: Imec VZW, 3001 Leuven (BE); Katholieke Universiteit Leuven KU Leuven Research & Development, 3000 Leuven (BE)
(72) Inventor: LIANG, Boshen, 3001 Leuven (BE)
(74) Representative: AWA Sweden AB

(56) References cited:
- WO-A2-2008/049022
- US-A1- 2017 243 799

## Description

### Technical field

The present inventive concept relates to the field of microelectronic devices.

More particularly, it relates to a method of fabricating e.g. a flexible microelectronic device comprising a soft polymer and microelectronic devices manufactured by such a method.

### Background

In recent years, there has been an increasing interest in utilizing soft polymers for many technological applications, such as flexible electronics, microfluidics, biomedical devices, epidermal electronics and hybrid Complementary Metal Oxide Semiconductor (CMOS) devices. Compared with devices where soft polymers are used as pure mechanical foundation, metal and/or inorganic layers are deposited on top of polymer to achieve diverse functionalities.

However, patterning of metal or inorganic layers that are deposited on top of the soft and flexible polymer is always a necessity to achieve different functions. During the patterning, elevated temperature is normally involved. Once the temperature reaches the critical temperature T_{cr}, there is a high risk that the metal or inorganic coatings wrinkle.

As a typical example, photoresist is often used to define the pattern of metal or inorganic coatings. To process photoresist, soft baking and hard baking at higher temperature are needed. During the baking, metal or inorganic coatings are prone to wrinkle. Even though the wrinkling can be used purposely in some cases, a wrinkle-free coating is preferred for many applications. For the latter case, a high-enough T_{cr} is crucial to allow corresponding process steps.

Thus, there is a need in the art for methods of fabricating flexible electronic devices with decreased risk of wrinkling of the metal or inorganic layers coated onto the soft, flexible polymers.

### Summary

It is an object of the invention to at least partly overcome one or more limitations of the prior art. In particular, it is an object to provide a method for fabricating a device comprising a soft polymer with decreased risk of wrinkling of the metal or inorganic layer coated on top of the soft polymer.

As a first aspect of the invention, there is provided a method of forming a microelectronic device comprising the steps of
a) providing a substrate onto which a soft polymer is coated;
b) forming a wrinkle suppression layer on top of said soft polymer, said wrinkle suppression layer having a coefficient of thermal expansion (CTE) of less than 10 ppm/°C;
c) forming an inorganic or metallic coating on top of said wrinkle suppression layer; and
d) forming at least one active component of the microelectronic device of said inorganic or metallic coating or on top of said inorganic or metallic coating; wherein said wrinkle suppression layer does not form part of any active component of the microelectronic device.

The inventor has found that wrinkles may depend on the release of compressive force generated due to thermal expansion mismatch between the metal or inorganic layers and the substrate, and that wrinkles may be supressed by introducing a thin low-CTE layer under the original metal or inorganic coatings. A multi-fold increase of critical temperature T_{cr} may be achieved by using this novel strategy. Moreover, the method is easily implemented in standard process flows for fabricating microelectronic devices.

As used herein, the term vertical denotes a direction being parallel to a vertical geometrical axis extending perpendicular to the substrate. The terms "above", "below", "upper" and "lower" are thus used to refer to relative positions along the vertical axis. In addition, the term lateral or horizontal refers to the direction perpendicular to the vertical direction, i.e. to the direction parallel to the substrate surface.

Thus, the wrinkle suppression layer is formed above the soft polymer, and the inorganic or metallic coating is formed above the wrinkle suppression layer. As an example, the wrinkle suppression layer may be coated directly on top of the soft polymer.

The inorganic or metallic coating may for example comprise a metal selected from Au, Al, Ni, Mo, Ag and Cu. Thus, the inorganic or metallic coating may be a metal layer of Au, Al, Ni, Mo, Ag or Cu. The inorganic or metallic coating may further comprise an inorganic material, e.g. SiOₓ, SiNₓ or AlOₓ, such as a layer consisting of SiOₓ, SiNₓ or AlOₓ. The thickness of the inorganic or metallic coating may e.g. be a few nanometers up to several micrometers.

The wrinkle suppression layer formed or coated onto the soft polymer may have a thickness of below 25 nm, such as a thickness below 15 nm, such as a thickness below 10 nm.

Moreover, the wrinkle suppression layer function as a part of a substrate, i.e. a passive layer, onto which the active components of the microelectronic device are formed. The wrinkle suppression layer may thus function as a substrate used to provide support for microelectronic components. Thus, the wrinkle suppression layer does not form part of any active component of the microelectronic device. An active component may for example be an electrode or a part of an integrated circuit. Thus, the wrinkle suppression layer does not form part of any active circuit component of the microelectronic device. Consequently, in the fabricated microelectronic device, the wrinkle suppression layer may be in the form of a layer that has not been further patterned or manipulated after the formation or deposition onto the soft polymer.

The method may be used where wrinkle-free metal or inorganic coatings and patterning on soft polymer are required. Microelectronic devices that may be fabricated by the method of the first aspect thus include microfluidic devices, biomedical devices, flexible electronic devices, hybrid CMOS devices, electrodes and actuators or parts of an actuator.

In embodiments of the first aspect, the substrate is selected from silicon and glass.

As an example, the substrate may be a silicon on insulator (SOI) wafer.

Furthermore, the substrate may be a layered structure, i.e. there may be additional layers provided between e.g. a silicon and glass substrate and the soft polymer.

Steps b) and c), i.e. the formation of the wrinkle suppression layer and the inorganic or metallic coating, may be performed by conventional film depositing methods in the art. As an example, physical vapor deposition (PVD) and chemical vapor deposition (CVD) may be used for deposition of the wrinkle suppression layer and/or the inorganic or metallic coating. However, also inject printing, screening printing and plating may be used.

Moreover, the soft polymer may for example be coated on the substrate by using e.g. spin coating or dry film lamination.

In embodiments of the first aspect, the wrinkle suppression layer has a face centered cubic (FCC) crystal structure. If the wrinkle suppression layer has a face centered cubic (FCC) crystal structure, the thickness of the wrinkle suppression layer may be less than 10 nm.

The inventor has found that a thin layer of a material having an FCC crystal structure may have an apparent lower CTE than the CTE of the same material in bulk. Consequently, in embodiments of the first aspect, the material of the wrinkle suppression layer may have CTE of above 10 ppm/°C in bulk.

Thus, in order words, the inventor has found that the FCC materials - when its dimension is constrained, such as when being formed with a low thickness (such below 10nm) - may have a low CTE, even if the bulk value of the material has a CTE of above 10 ppm/°C.

Thus, it is to be understood that the feature of the "wrinkle suppression layer having a coefficient of thermal expansion (CTE) of less than 10 ppm/°C" according to the first aspect refers to the CTE of the formed wrinkle suppression layer, and not to the bulk CTE. However, the bulk CTE and the CTE of the formed wrinkle suppression may be the same for some materials.

As an example, the wrinkle suppression layer may be a layer selected the group consisting of an Al, Ca, Ni, Cu, Ge, Sr, Rh, Pd, Ag, Ir, Pt and Au layer.

These materials may all be found with an FCC crystal structure.

As an example, the wrinkle suppression layer may be a layer selected the group consisting of an Al, Au, and a Ni layer. As demonstrated in the Experimental section below, the inventor has found that these materials, when being provided in a sub 10 nm thickness, may substantially increase the T_{cr} of the coating, thereby allowing subsequent high temperature processing steps with a reduced risk of wrinkling.

As an alternative solution, the inventor has found that to avoid wrinkling generated due to CTE mismatch, the CTE of the metal or inorganic coating and the CTE of the substrate could be matched. The widely used substrates in micro/nanoelectronic industry are silicon or glass substrates, with CTEs ranging typically from 3-7ppm/°C. Thus, the inventor has found that Group 6 elements, such as Cr, Mo and W, may be used as wrinkle suppression layer since they have a CTE that matches such common substrates.

Consequently, in embodiments of the first aspect, the wrinkle suppression layer has a CTE that differs less than 5 ppm/°C from the CTE of the substrate.

As an example, the substrate may be selected from glass and silicon, and the wrinkle suppression layer may be selected from a Cr, Mo, and W layer.

However, the wrinkle suppression layer may as an alternative be an inorganic layer having a CTE that differs less than 5 ppm/°C from the CTE of the substrate.

Furthermore, in embodiments of the first aspect, the wrinkle suppression layer is formed as a continuous layer on at least a portion of the soft polymer.

As an example, the wrinkle suppression layer may be formed as a continuous layer over at least 1 µm², such as over at least 5 µm², such as over at least 10 µm², such as over at least 100 µm², of the surface of the soft polymer.

However, the wrinkle suppression layer may be formed in a pattern over the surface of the soft polymer.

As a further example, the wrinkle suppression layer may be formed as a continuous layer over the whole surface of the soft polymer.

Thus, in embodiments of the first aspect, the wrinkle suppression layer is not formed as a mesh across the surface of the soft polymer.

In embodiments of the first aspect, any previous claim, the soft polymer has a Young's Modulus of less than 500 MPa. As an example, the soft polymer may have a Young's Modulus of less than 100 MPa.

Moreover, the glass transition temperature (Tg) of the soft polymer may be lower than room temperature. In embodiments of the first aspect, the glass transition temperature (Tg) of the soft polymer is lower than 25 °C.

As an example, the soft polymer may be an elastomer.

Further, the glass transition temperature of the soft polymer may be higher than T_{cr}. Thus, the soft polymer may be a thermoplastic and thermoset polymer.

The method may require little preparation of the formed soft polymer layer before the wrinkle suppression layer is formed on top of the polymer. In embodiments of the first aspect, the soft polymer is not pre-strained before forming the wrinkle suppression layer on top of said soft polymer.

In embodiments of the first aspect, the method is further comprising a step e) of removing said substrate, thereby obtaining a flexible microelectronic device. Thus, the method of the first aspect may be used for fabricating a flexible microelectronic device. The step e) of removing the flexible substrate may be performed after forming active microelectronic components on top of the wrinkle suppression layer.

As a second aspect of the invention, there is provided a flexible microelectronic device comprising
- a soft polymer substrate;
- a wrinkle suppression layer on top of said soft polymer, said wrinkle suppression layer having a coefficient of thermal expansion (CTE) of less than 10 ppm/°C;
- at least one active component arranged on top of said wrinkle suppression layer; wherein
said wrinkle suppression layer does not form part of any active component of the microelectronic device.

This aspect may generally present the same or corresponding advantages as the former aspect. Effects and features of this second aspect are largely analogous to those described above in connection with the first aspect. Embodiments mentioned in relation to the first aspect are largely compatible with the second aspect.

Thus, in embodiments of the second aspect, the wrinkle suppression layer is as discussed in relation to any embodiment of the first aspect above. Further, the soft polymer substrate may also be as discussed in relation to any embodiment of the first aspect above.

The at least one active component may for example be an electrode or a part of an integrated circuit, and the wrinkle suppression layer thus does not form part of such active component of the flexible microelectronic device. The active component may be an inorganic or metallic coating or be formed of such an inorganic or metallic coating. Thus, in embodiments of the second aspect, the flexible microelectronic device further comprises an inorganic or metallic coating on top of the wrinkle suppression layer. As an alternative, the active component may be formed on top of such an inorganic or metallic coating.

The present invention further provides a microelectronic device comprising a substrate onto which a soft polymer is coated, a wrinkle suppression layer on top of said soft polymer, said wrinkle suppression layer having a coefficient of thermal expansion (CTE) of less than 10 ppm/°C and at least one active component arranged on top of said wrinkle suppression layer; wherein the wrinkle suppression layer does not form part of any active component of the microelectronic device.

According to another aspect of the present inventive concept, there is provided a substrate for the formation of a flexible microelectronic device. The substrate comprises
- a substrate onto which a soft polymer is coated; and
- a wrinkle suppression layer on top of said soft polymer, said wrinkle suppression layer having a coefficient of thermal expansion (CTE) of less than 10 ppm/°C.

This aspect may generally present the same or corresponding advantages as the former aspect. Effects and features of this aspect are largely analogous to those described above in connection with the first and second aspects. Embodiments mentioned in relation to the first and second aspects are largely compatible with the second aspect.

Thus, the soft polymer and/or the wrinkle suppression layer may be as discussed in relation to any embodiment of the first aspect above.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 is a schematic illustration of a cross section of an embodiment of a microelectronic device according to the present disclosure.
Fig. 2 is a schematic illustration of a cross section of a further embodiment of a microelectronic device according to the present disclosure.
Fig. 3 is a schematic illustration of a cross section of a further embodiment of a microelectronic device according to the present disclosure in the form of a microfluidic device.
Fig. 4 is a schematic illustration of a cross section of a further embodiment of a microelectronic device according to the present disclosure in the form of a biomedical device.
Fig. 5 is a schematic illustration of a cross section of a further embodiment of a microelectronic device according to the present disclosure in the form of a flexible microelectronic device.
Fig. 6 is a schematic representation of the process steps of the method for forming a microelectronic device.

### Detailed description

The present invention relates to microelectronic devices and methods of forming such devices. The method is especially useful for technological fields such as flexible electronics, microfluidics, biomedical devices, Hybrid CMOS and so on. Further, the invention It is aimed to achieve wrinkle-free metal and inorganic coatings and patterning on soft polymers by adding and additional wrinkle suppression layer on top of the soft polymer. This wrinkle suppression layer is low-CTE layer.

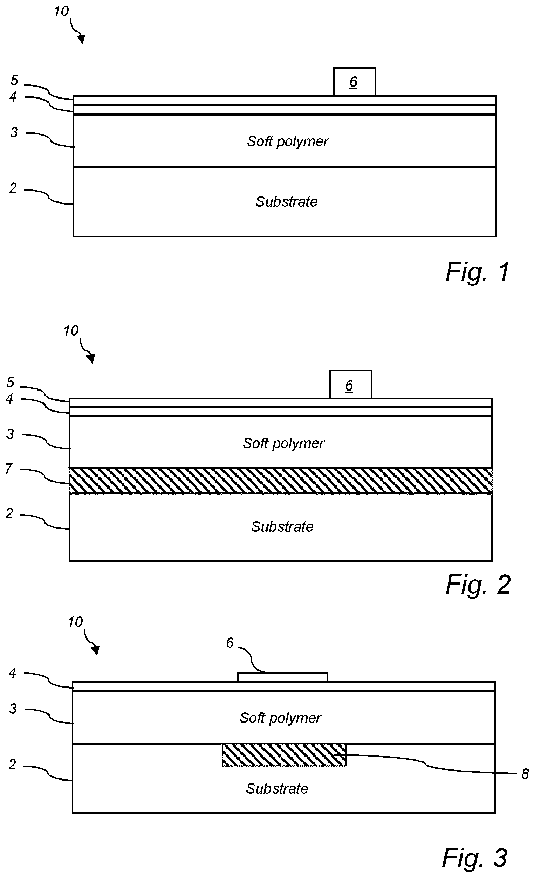

Fig. 1 a schematic illustration of a cross section of an embodiment of a microelectronic device 10 according to the present disclosure. The device comprises a layered structure on top of a substrate 2. This substrate 2 may be selected from silicon or glass. As an example, the substrate 2 may be a silicon-on-insulator (SOI) wafer. On top of the substrate, a soft polymer 3 is arranged. This polymer may aid in providing flexibility to the formed device 10. As an example, the soft polymer may have a Young's Modulus of less than 500 MPa. Moreover, the glass transition temperature (Tg) of the soft polymer 3 may be lower than 25 °C.

As further illustrated in Fig. 1, there is a wrinkle suppression layer 4 coated on top of the soft polymer 3. The wrinkle suppression layer 4 is formed as a continuous layer on top of the soft polymer 3.

This wrinkle suppression layer 4 has a coefficient of thermal expansion (CTE) of less than 10 ppm/°C such that higher temperature processing steps are possible and diverse functionalities can be added to the device 10. The wrinkle suppression layer 4 may be formed by one or several elements selected from one of two different element groups to achieve the wrinkle-suppression function.

The first group of elements used for forming the wrinkle suppression layer 4 may be elements having an FCC crystal structure, and the inventor has found that a low-CTE may be effectively achieved by limiting the layer thickness to e.g. below 10 nm. Thus, the material of the wrinkle suppression layer 4 may have a CTE of above 10 ppm/°C in bulk, but may have an "effective CTE that is lower once the layer thickness is below 10 nm. As an example, the wrinkle suppression layer 4 a layer consisting of one or several elements selected from the group consisting of an Al, Ca, Ni, Cu, Ge, Sr, Rh, Pd, Ag, Ir, Pt and Au.

The second group of elements used for forming the wrinkle suppression layer 4 may be the Group 6 elements (Cr, Mo, W) that are featured with low-CTEs as seen from their bulk CTE values. Thus, the wrinkle suppression layer 4 may have a CTE that differs less than 5 ppm/°C from the CTE of the substrate 2. As an example, the substrate 2 may be selected from glass and silicon, and the wrinkle suppression layer 4 may then be selected from a Cr, Mo, and W layer.

However, the wrinkle suppression layer 4 may as an alternative be selected from other inorganic coatings with close CTEs to the substrate as well.

As seen in Fig. 1, there is a metal or inorganic layer 5 deposited on top of the wrinkle suppression layer 4. Patterning of this layer 6 may be needed during the fabrication of the microelectronic device 10, but due to the wrinkle suppression layer 4, there is a reduced risk of the metal or inorganic layer 5 wrinkling during e.g. exposure to elevated temperature, such as during exposure of elevated temperature during soft or hard baking in the photoresist processing.

The metal or inorganic layer 5 may in turn be used as a substrate onto which active components 6 of the microelectronic device 10 is formed. As a complement or alternative, active components 6 may also be formed within the metal or inorganic layer 5, i.e. the metal or inorganic layer 5 may form part of an active component 6.

It is thus to be understood that the wrinkle-suppression layer 4 coated on top of the soft polymer 3 functions as a part of the soft polymer substrate, and does not form part of any active component of the microelectronic device 10. Consequently, in this invention, instead of using single-layer low-CTE metal/inorganic layer 5 to increase T_{cr}, another nm-range low-CTE coating, i.e. the wrinkle suppression layer 4, is added underneath the desired metal/inorganic layer 5 to suppress the formation of wrinkles, e.g. by increasing T_{cr}.

It is to be noted that the soft polymer 3 does not need to be coated directly on top of the substrate 2. This is illustrated in the embodiment shown in Fig. 2, in which additional layers 7 are added in between the substrate 2 and the soft polymer 3. Further, the additional layers 7 as illustrated in Fig. 2 may also be patterned, for example to form a microfluidic channel. Thus, the additional layers 7 do not have to form complete layers.

Moreover, the actual substrate 2 does not need to be removed in order to form a microelectronic device 10. Fig. 3 illustrates an embodiment in which the substrate 2 is structured, e.g. to form a microfluidic channel 8 within the substrate. Thus, the microelectronic device 10 may in the embodiment illustrated in Fig. 3 be a microfluidic device. In such a device, the active components 6 may be formed within the metallic or inorganic layer 5 deposited on the wrinkle suppression layer 4. Thus, a deposited metallic or inorganic layer may be processed such that it subsequently forms a part of an active component, such as part of an electrode of the microfluidic device. Such electrode may e.g. be configured to be actuated electrostatically, magnetically or piezoelectrically.

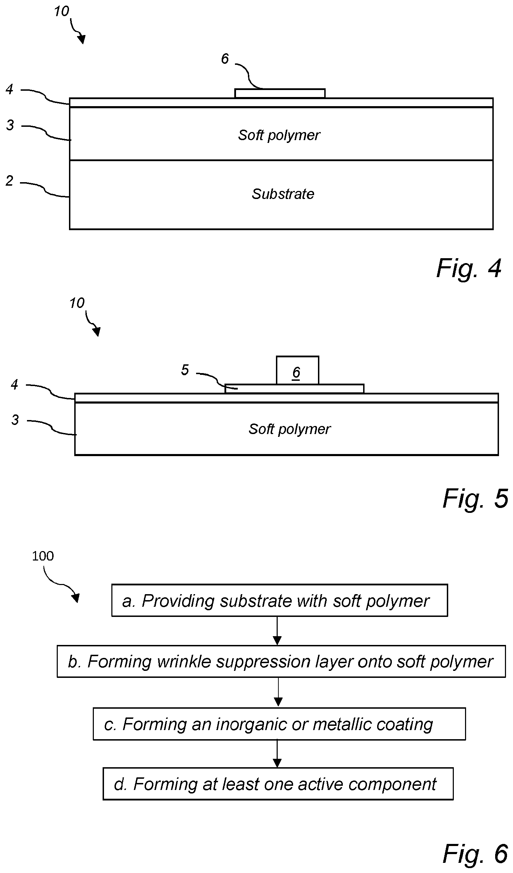

The microelectronic device 10 may also be a biomedical device, as illustrated in Fig. 4. In such a device, the metallic or inorganic layer 5 may be used for forming and thus be part of an active component 6 of the fabricated biomedical device, such as an electrode used for signalling.

To obtain a flexible microelectronic device, the substrate 2 may be removed, e.g. after forming active components 6 above of the wrinkle suppression layer 4. The soft polymer layer 3 may thus thereafter form the flexible substrate of the flexible microelectronic device 10, which is illustrated in Fig. 5. In this device, part of the metallic or inorganic coating 5, together with active components 6 formed on top of the metallic or inorganic layer 6, may be used for forming an integrated circuit or other CMOS based electronics of the flexible microelectronic device 10.

Fig. 6 schematically illustrates a method of forming a microelectronic device according to the present disclosure. The method comprises a first step a) of providing a substrate onto which a soft polymer is coated. Step a) may thus also comprise coating a soft polymer onto the substrate. The method further comprises step b) of forming a wrinkle suppression layer 4 on top of the soft polymer 3, said wrinkle suppression layer 4 having a coefficient of thermal expansion (CTE) of less than 10 ppm/°C. The wrinkle suppression layer 4 may for example also have at thickness that is less than 10 nm. The method further comprises a step c) of forming an inorganic or metallic coating 5 on top of the wrinkle suppression layer 4, and a step d) of forming at least one active component 6 of the microelectronic device of the inorganic or metallic coating or, alternatively or as a complement, forming at least one active component 6 of the microelectronic device on top of said inorganic or metallic coating 5. The wrinkle suppression layer 4 does not form part of any such active component of the microelectronic device that is formed of or on top of the inorganic or metallic coating.

### Experimental Example

A series of proof-of-concept experiments were conducted in clean room facilities. Table 1 below lists materials and corresponding properties that were involved in the experiment.

**Table 1**

| **Category** | **Name** | **Thickness** | **Bulk CTE (10ppm/°C)** | **Company/Tool** |
|---|---|---|---|---|
| **Substrate** | Eagle XG | 1.1 mm | 3.9 | Corning |
| **Soft polymer** | Polyisoprene | 5 µm | 200 | Fujifilm |
| **Metals** | Al/Au/Mo/Ti | 5-80 nm | 23/14/5/8.9 | PFEIFFER Spider 630 |

Before adding the proposed low-CTE wrinkle suppression layer, different single-layer metals with 80 nm thickness were deposited onto the polymer and the critical wrinkling temperatures were recorded. The result of single-layer metal experiment is summarized in Table 2 below.

**Table 2**

| **Metal** | **Thickness (nm)** | **T_{cr} (°C)** |
|---|---|---|
| **Al** | 80 | 70 |
| **Au** | 80 | 80 |
| **Mo** | 80 | 90 |
| **Ti** | 80 | 21 |

As seen in Table 2, coating the soft polymer with a thick metallic layer (80 nm) only, the measured Tcr values are low, i.e. the risk of wrinkle formation during subsequent thermal treatment is high.

The same type of samples were prepared again, but with an addition of a thin wrinkle suppression layer onto the soft polymer before coating with a thicker metallic coating.

After adding the proposed low-CTE wrinkle suppression layers underneath the "original" coating, T_{cr} was recorded again for different combinations of wrinkle suppression layer and metallic coatings. The result is summarized in Table 3 below.

**Table 3**

| **Added low-CTE wrinkle suppression layer** | | **Original coating** | | |
|---|---|---|---|---|
| **Metal** | **Thickness (nm)** | **Metal** | **Thickness (nm)** | **T_{cr} (°C)** |
| **Au** | 5 | Al | 80 | >160 |
| **Mo** | 5 | Al | 80 | >120 |
| **Ni** | 5 | Al | 80 | >190 |
| **Mo** | 5 | Au | 80 | >250 |
| **Mo** | 3 | Au | 80 | >250 |
| **Mo** | 1 | Au | 80 | >250 |
| **Au** | 10 | Mo | 80 | >190 |
| **Al** | 5 | Ti | 80 | >190 |
| **Au** | 5 | Al | 80 | >160 |

A comparison between Table 2 and Table 3 clearly shows that by adding a wrinkle suppression layer, such as a sub 10 nm layer, T_{cr} is substantially increased to allow high temperature processing steps. Apart from the indicated experiments, other possible layer combinations are verified in MATLAB by numerical calculation.

In the above, the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method of forming a microelectronic device comprising the steps of
a) providing a substrate (2) onto which a soft polymer (3) is coated;
b) forming a wrinkle suppression layer (4) on top of said soft polymer (3), said wrinkle suppression layer (4) having a coefficient of thermal expansion (CTE) of less than 10 ppm/°C;
c) forming an inorganic or metallic coating (5) on top of said wrinkle suppression layer (4); and
d) forming at least one active component (6) of the microelectronic device of said inorganic or metallic coating or on top of said inorganic or metallic coating (5); wherein said wrinkle suppression layer (4) does not form part of any active component of the microelectronic device.

2. A method according to claim 1, wherein the substrate (2) is selected from silicon and glass.

3. A method according to claim 1 or 2, wherein the wrinkle suppression layer (4) has a face centered cubic (FCC) crystal structure and a thickness of less than 10 nm.

4. A method according to claim 3, wherein the material of the wrinkle suppression layer (4) has CTE of above 10 ppm/°C in bulk.

5. A method according to claim 3 or 4, wherein the wrinkle suppression layer (4) is a layer selected the group consisting of an Al, Ca, Ni, Cu, Ge, Sr, Rh, Pd, Ag, Ir, Pt and Au layer.

6. A method according to claim 5, wherein the wrinkle suppression layer (4) is a layer selected the group consisting of an Al, Au, and a Ni layer.

7. A method according to claim 1 or 2, wherein the wrinkle suppression layer (4) has a CTE that differs less than 5 ppm/°C from the CTE of the substrate (2).

8. A method according to claim 7, wherein the substrate (2) is selected from glass and silicon, and wherein the wrinkle suppression layer (4) is selected from a Cr, Mo, and W layer.

9. A method according to any previous claim, wherein the wrinkle suppression layer (4) is formed as a continuous layer on at least a portion of the soft polymer (3).

10. A method according to any previous claim, wherein the soft polymer (3) has a Young's Modulus of less than 500 MPa.

11. A method according to any previous claim, wherein the soft polymer (3) is not pre-strained before forming the wrinkle suppression layer (4) on top of said soft polymer (3).

12. A method according to any previous claim, wherein the glass transition temperature (Tg) of the soft polymer (3) is lower than 25 °C.

13. A method according to any previous claim, further comprising a step e) of removing said substrate (2), thereby obtaining a flexible microelectronic device.

14. A flexible microelectronic device (10) comprising
- a soft polymer substrate (3);
- a wrinkle suppression layer (4) on top of said soft polymer (3), said wrinkle suppression layer (4) having a coefficient of thermal expansion (CTE) of less than 10 ppm/°C;
- at least one active component (6) arranged on top of said wrinkle suppression layer (4); wherein
said wrinkle suppression layer (4) does not form part of any active component (6) of the microelectronic device.

15. A substrate for the formation of a flexible microelectronic device, comprising
- a substrate (2) onto which a soft polymer (3) is coated; and
- a wrinkle suppression layer (4) on top of said soft polymer (3), said wrinkle suppression layer (4) having a coefficient of thermal expansion (CTE) of less than 10 ppm/°C.

## Patentansprüche

1. Verfahren zum Bilden einer mikroelektronischen Vorrichtung, umfassend folgende Schritte
a) Bereitstellen eines Substrats (2), auf das ein Weichpolymer (3) aufgetragen wird;
b) Bilden einer Faltenunterdrückungsschicht (4) auf dem Weichpolymer (3), wobei die Faltenunterdrückungsschicht (4) einen Wärmeausdehnungskoeffizienten (CTE) von weniger als 10 ppm/°C aufweist;
c) Bilden einer anorganischen oder metallischen Beschichtung (5) auf der Faltenunterdrückungsschicht (4); und
d) Bilden mindestens eines aktiven Bauteils (6) der mikroelektronischen Vorrichtung der anorganischen oder metallischen Beschichtung auf der anorganischen oder metallischen Beschichtung (5); wobei die Faltenunterdrückungsschicht (4) nicht Teil eines aktiven Bauteils der mikroelektronischen Vorrichtung ist.

2. Verfahren nach Anspruch 1, wobei das Substrat (2) aus Silizium und Glas ausgewählt wird.

3. Verfahren nach Anspruch 1 oder 2, wobei die Faltenunterdrückungsschicht (4) eine kubisch flächenzentrierte (FCC) Kristallstruktur und eine Dicke von weniger als 10 nm aufweist.

4. Verfahren nach Anspruch 3, wobei das Material der Faltenunterdrückungsschicht (4) einen CTE von mehr als 10 ppm/°C als Massengut aufweist.

5. Verfahren nach Anspruch 3 oder 4, wobei die Faltenunterdrückungsschicht (4) eine Schicht ist, die aus der Gruppe ausgewählt wird, die aus einer AI-, Ca-, Ni-, Cu-, Ge-, Sr-, Rh-, Pd-, Ag-, Ir-, Pt- und Au-Schicht besteht.

6. Verfahren nach Anspruch 5, wobei die Faltenunterdrückungsschicht (4) eine Schicht ist, die aus der Gruppe ausgewählt wird, die aus einer AI-, Au-, und einer Ni-Schicht besteht.

7. Verfahren nach Anspruch 1 oder 2, wobei die Faltenunterdrückungsschicht (4) einen CTE aufweist, der sich um weniger als 5 ppm/°C von dem CTE des Substrats (2) unterscheidet.

8. Verfahren nach Anspruch 7, wobei das Substrat (2) aus Glas und Silizium ausgewählt wird, und wobei die Faltenunterdrückungsschicht (4) aus einer Cr-, Mo- und W-Schicht ausgewählt wird.

9. Verfahren nach einem der vorhergehenden Ansprüche, wobei die Faltenunterdrückungsschicht (4) aus einer durchgehenden Schicht auf mindestens einem Abschnitt des Weichpolymers (3) gebildet wird.

10. Verfahren nach einem der vorhergehenden Ansprüche, wobei das Weichpolymer (3) einen Elastizitätsmodul von weniger als 500 MPa aufweist.

11. Verfahren nach einem der vorhergehenden Ansprüche, wobei das Weichpolymer (3) nicht vorgespannt wird, bevor die Faltenunterdrückungsschicht (4) auf dem Weichpolymer (3) gebildet wird.

12. Verfahren nach einem der vorhergehenden Ansprüche, wobei die Glasübergangstemperatur (Tg) des Weichpolymers (3) geringer als 25 °C ist.

13. Verfahren nach einem der vorhergehenden Ansprüche, ferner umfassend einen Schritt e) des Entfernens des Substrats (2), wodurch eine flexible mikroelektronische Vorrichtung erzielt wird.

14. Flexible mikroelektronische Vorrichtung (10), umfassend
- ein Weichpolymersubstrat (3);
- eine Faltenunterdrückungsschicht (4) auf dem Weichpolymer (3), wobei die Faltenunterdrückungsschicht (4) einen Wärmedehnungskoeffizienten (CTE) von weniger als 10 ppm/°C aufweist;
- mindestens ein aktives Bauteil (6), das auf der Faltenunterdrückungsschicht (4) angeordnet ist; wobei
die Faltenunterdrückungsschicht (4) nicht Teil eines aktiven Bauteils (6) der mikroelektronischen Vorrichtung ist.

15. Substrat zum Bilden einer flexiblen mikroelektronischen Vorrichtung, umfassend
- ein Substrat (2), auf dem ein Weichpolymer (3) aufgetragen ist; und
- eine Faltenunterdrückungsschicht (4) auf dem Weichpolymer (3), wobei die Faltenunterdrückungsschicht (4) einen Wärmeausdehnungskoeffizienten (CTE) von weniger als 10 ppm/°C aufweist.

## Revendications

1. Procédé de formation d'un dispositif microélectronique comprenant les étapes consistant à
a) fournir un substrat (2) sur lequel un polymère souple (3) est appliqué ;
b) former une couche de suppression des plis (4) au-dessus dudit polymère souple (3), ladite couche de suppression des plis (4) ayant un coefficient de dilatation thermique (CTE) inférieur à 10 ppm/°C ;
c) former un revêtement inorganique ou métallique (5) au-dessus de ladite couche de suppression des plis (4) ; et
d) former au moins un composant actif (6) du dispositif microélectronique dudit revêtement inorganique ou métallique ou au-dessus dudit revêtement inorganique ou métallique (5) ; dans lequel ladite couche de suppression des plis (4) ne fait partie d'aucun composant actif du dispositif microélectronique.

2. Procédé selon la revendication 1, dans lequel le substrat (2) est choisi parmi le silicium et le verre.

3. Procédé selon la revendication 1 ou 2, dans lequel la couche de suppression des plis (4) possède une structure cristalline cubique à faces centrées (FCC) et une épaisseur inférieure à 10 nm.

4. Procédé selon la revendication 3, dans lequel le matériau de la couche de suppression des plis (4) a un CTE supérieur à 10 ppm/°C en masse.

5. Procédé selon la revendication 3 ou 4, dans lequel la couche de suppression des plis (4) est une couche choisie dans le groupe consistant en une couche Al, Ca, Ni, Cu, Ge, Sr, Rh, Pd, Ag, Ir, Pt et Au.

6. Procédé selon la revendication 5, dans lequel la couche de suppression des plis (4) est une couche sélectionnée dans le groupe constitué d'une couche d'AI, d'Au et de Ni.

7. Procédé selon la revendication 1 ou 2, dans lequel la couche de suppression des plis (4) possède un CTE qui diffère de moins de 5 ppm/°C du CTE du substrat (2).

8. Procédé selon la revendication 7, dans lequel le substrat (2) est choisi parmi le verre et le silicium, et dans lequel la couche de suppression des plis (4) est choisie parmi une couche de Cr, Mo et W.

9. Procédé selon une quelconque des revendications précédentes, dans lequel la couche de suppression des plis (4) est formée comme une couche continue sur au moins une partie du polymère souple (3).

10. Procédé selon une quelconque des revendications précédentes, dans lequel le polymère souple (3) a un module de Young inférieur à 500 MPa.

11. Procédé selon une quelconque des revendications précédentes, dans lequel le polymère souple (3) n'est pas précontraint avant de former la couche de suppression des plis (4) au-dessus dudit polymère souple (3).

12. Procédé selon une quelconque des revendications précédentes, dans lequel la température de transition vitreuse (Tg) du polymère souple (3) est inférieure à 25 °C.

13. Procédé selon une quelconque des revendications précédentes, comprenant en outre une étape e) de retrait dudit substrat (2), en obtenant ainsi un dispositif microélectronique souple.

14. Dispositif microélectronique flexible (10) comprenant
- un substrat polymère souple (3) ;
- une couche de suppression des plis (4) au-dessus dudit polymère souple (3), ladite couche de suppression des plis (4) ayant un coefficient de dilatation thermique (CTE) inférieur à 10 ppm/°C ;
- au moins un composant actif (6) disposé au-dessus de ladite couche de suppression des plis (4) ; dans lequel ladite couche de suppression des plis (4) ne fait partie d'aucune composant actif (6) du dispositif microélectronique.

15. Substrat pour la formation d'un dispositif microélectronique flexible, comprenant
- un substrat (2) sur lequel un polymère souple (3) est enduit ; et
- une couche de suppression des plis (4) au-dessus dudit polymère souple (3), ladite couche de suppression des plis (4) ayant un coefficient de dilatation thermique (CTE) inférieur à 10 ppm/°C.
